# EUROPÄISCHE PATENTANMELDUNG

(11) **EP 1 431 215 A1**
(43) Veröffentlichungstag der Anmeldung: **23.06.2004**
(21) Anmeldenummer: 03405866.9
(22) Anmeldetag: 04.12.2003
(51) Int. Cl.: B65G 49/06, C03B 33/02

(54) **Verfahren und Vorrichtung zum beschicken einer Glasverarbeitungsanlage**

(30) Priorität: 19.12.2002 CH 20022168
(71) Anmelder: Bystronic Maschinen AG, CH-4922 Bützberg (CH)
(72) Erfinder: Honegger, Rolf, 4800 Zofingen (CH); Gfeller, Hans, 4912 Aarwangen (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Zusammenfassung**

Die Vorrichtung zum Beschicken einer Glasverarbeitungsanlage (5) umfasst eine Speichereinheit (20) mit mindestens zwei Fächern (21), wobei in jedes Fach mindestens eine Glasplatte (10) aufgenommen werden kann, und Verschiebemittel zum Verschieben einer in einem Fach aufgenommenen Glasplatte, sodass sie mindestens teilweise aus dem Fach herausschiebbar ist. Beim Verfahren zum Beschicken der Glasverarbeitungsanlage (5) mit Glasplattenteilen werden in einer bestimmten Reihenfolge Glasplatten (10) aus der Speichereinheit (20) herausgezogen und Glasplattenteile (10a) abgetrennt. Die Glasverarbeitungsanlage kann gezielt mit Glasplattenteilen einer bestimmten Abmessung und einer bestimmten Sorte beschickt werden.

## Beschreibung

Die Erfindung bezieht sich auf ein Verfahren zum Beschicken einer Glasverarbeitungsanlage mit Glasplatten sowie auf eine Vorrichtung dazu gemäss Oberbegriff des unabhängigen Vorrichtungsanspruchs.

Bei den bekannten Verfahren und Vorrichtungen zum Beschicken einer Glasverarbeitungsanlage werden die Glasplatten aus dem Lager entnommen, als Ganzes der Glasverarbeitungsanlage übergeben und dann beispielsweise in die gewünschten Grössen zugeschnitten. Oft verlangt die Produktion, dass z.B. Gläser von verschiedenen Sorten in einer bestimmten Produktionsreihenfolge oder nur eine bestimmte Anzahl von Gläsern derselben Sorte hergestellt werden. So wird etwa zur Herstellung von Isoliergläsern ein beschichtetes Glas mit einem unbeschichteten Glas verbunden, wobei die Gläser vorgängig aus je einer Glasplatte in der gewünschten Grösse zugeschnitten werden. Da jedoch die Glasplatten als Ganzes der Glasverarbeitungsanlage übergeben werden, müssen die zugeschnittenen Gläser entsprechend sortiert bzw. zwischengelagert werden. Dies ist umständlich, da dazu entsprechende Vorrichtungen zur Handhabung und Zwischenlagerung der Gläser notwendig sind. Nachteilig bei den bekannten Verfahren und Vorrichtungen ist auch, dass beispielsweise bei der Produktion einer kleinen Stückzahl von Gläsern bestimmter Abmessung nur ein Teil einer ganzen Glasplatte benötigt wird, sodass der Restteil der Glasplatte ("Restblatt") aus der Produktionslinie herausgenommen und für eine spätere Weiterverarbeitung zwischengelagert werden muss. Die Handhabung, Lagerung und Verwaltung der Restblätter ist jedoch relativ umständlich.

Ausgehend von diesem Stand der Technik ist es Aufgabe der vorliegenden Erfindung, ein Verfahren und eine Vorrichtung der eingangs erwähnten Art anzugeben, mit welchen die Beschickung einer Glasverarbeitungsanlage verbessert werden kann, sodass obige Nachteile behebbar sind.

Ein erfindungsgemässes Verfahren und eine erfindungsgemässe Vorrichtung, welche diese Aufgabe lösen, sind im unabhängigen Verfahrens- bzw. Vorrichtungsanspruch angegeben. Die weiteren Ansprüche geben bevorzugte Ausführungen an.

Die Erfindung basiert auf der Erkenntnis, dass die Handhabung und Verwaltung des Glas-Materials innerhalb einer Glasverarbeitungsanlage wesentlich vereinfacht werden können, wenn diese nicht mit ganzen Glasplatten, sondern mit Teilen davon beschickt wird. Das erfindungsgemässe Verfahren sowie die erfindungsgemässe Vorrichtung weisen daher den Vorteil auf, dass eine Glasverarbeitungsanlage gezielt mit Gläsern einer bestimmten Abmessung und einer bestimmten Sorte beschickt werden kann.

Die Erfindung wird im Folgenden anhand von Ausführungsbeispielen unter Bezugnahme auf Figuren erläutert. Es zeigen
Fig. 1 eine schematische Draufsicht der Beschickungsvorrichtung;
Fig. 2 eine schematische Draufsicht der Vorrichtung gemäss Figur 1 zum Beschicken einer horizontalen Glasverarbeitungsanlage;
Fig. 3 eine schematische Draufsicht der Vorrichtung gemäss Figur 1 zum Beschicken einer vertikalen Glasverarbeitungsanlage;
Fig. 4 eine schematische Draufsicht der Vorrichtung gemäss Figur 1 zum Beschicken einer weiteren horizontalen Glasverarbeitungsanlage;
Fig. 5 eine Speichereinheit der Vorrichtung gemäss Figur 1 in einer Seitenansicht; und
Fig. 6 eine Schneideinrichtung zum Ritzen einer Glasplatte.

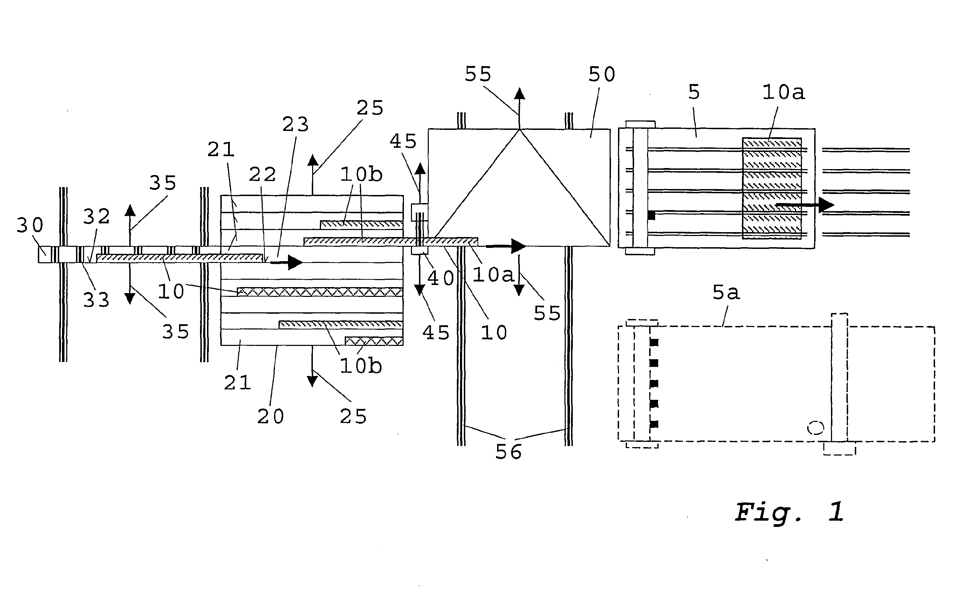

Fig. 1 zeigt schematisch den prinzipiellen Aufbau einer Beschickungsvorrichtung. Sie umfasst eine Speichereinheit 20 mit einer Anzahl Fächer 21, wobei jedes Fach 21 eine zu verarbeitende Glasplatte 10 aufnehmen kann. Die Fächer 21 weisen zum Stützen der Glasplatten 10 in einer im Wesentlichen vertikalen Lage jeweils eine Stützfläche 22 auf, welche entsprechend vertikal ausgerichtet ist. Typischerweise ist der Winkel zwischen einer jeweiligen Stützfläche 22 und der Vertikalen im Bereich von 0 bis 10 Grad. Da üblicherweise Glasplatten im Lager aus Platzgründen ebenfalls in einer im Wesentlichen vertikalen Lage gelagert werden, können sie somit vom Lager ohne Kippen in die Speichereinheit 20 verschoben werden. Dies ist besonders bei grossen Glasplatten vorteilhaft, da ihre Handhabung wegen ihres Gewichtes und ihrer Ausdehnung schwierig ist. So werden bei Glaszuschnittanlagen typischerweise Glasplatten mit einer Seitenfläche von 600 cm × 321 cm und einem Gewicht von bis zu einer Tonne verarbeitet.

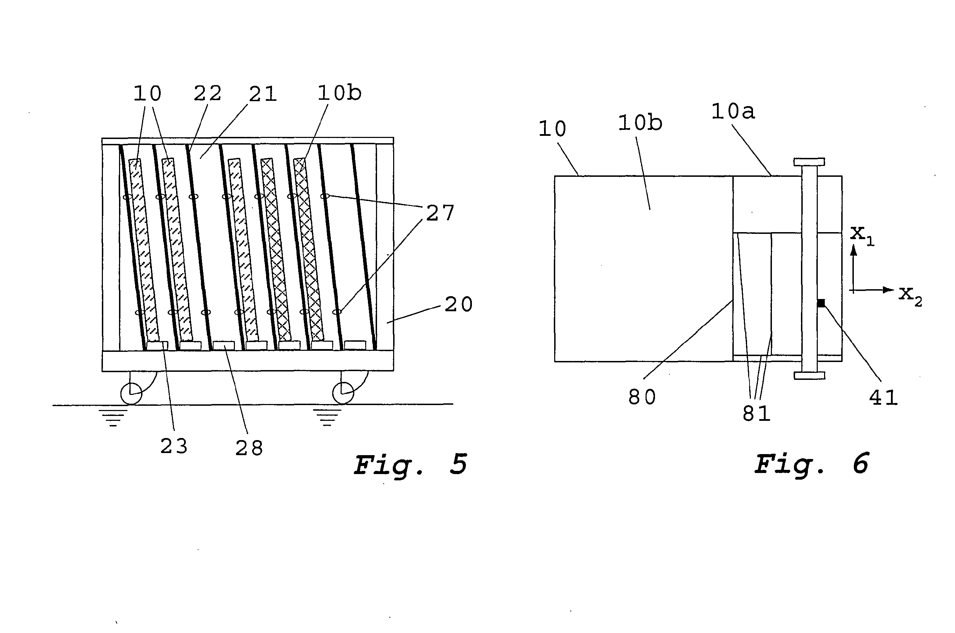

Die Stützflächen 22 weisen Gleitmittel auf, beispielsweise in Form von Rollen, eines Luftkissens und/oder einer Filzauflage, sodass die Glasplatte 10 entlang der Stützfläche 22 gleiten kann, ohne dabei zerkratzt oder sonst wie beschädigt zu werden. (Vgl. auch Fig. 5, welche die Gleitmittel 27 zeigt.) Als weitere Stützfläche weist jedes Fach 21 eine Auflagefläche 23 auf, auf welche die Glasplatte 10 mit einer ihrer Kanten aufliegt.

Zum Verschieben einer Glasplatte 10 entlang der Stützfläche 22 umfasst die Auflagefläche 23 Verschiebemittel beispielsweise in Form eines angetriebenen Transportbandes. (Vgl. auch Fig. 5, welche die Verschiebemittel 28 zeigt.) Anstelle eines Transportbandes ist es auch möglich, die Auflagefläche 23 mit Gleitmitteln wie Rollen zu versehen, sodass die Glasplatte 10 darauf gleiten und mit Verschiebemitteln wie einer Zange zum Greifen oder eines Stössels zum Stossen verschoben werden kann. Die Verschiebemittel dienen dazu eine Glasplatte 10 entlang dem Fach 21 hin und her zu verschieben. Dadurch kann sie wahlweise auf eine der beiden Seiten der Speichereinheit 20 ausgeschleust werden und ist beispielsweise zum Trennen mindestens teilweise aus dem Fach herausschiebbar, wobei der Rest 10b der Glasplatte nach dem Trennvorgang mittels der Verschiebemittel wieder in das Fach 21 zurückgeschoben werden kann.

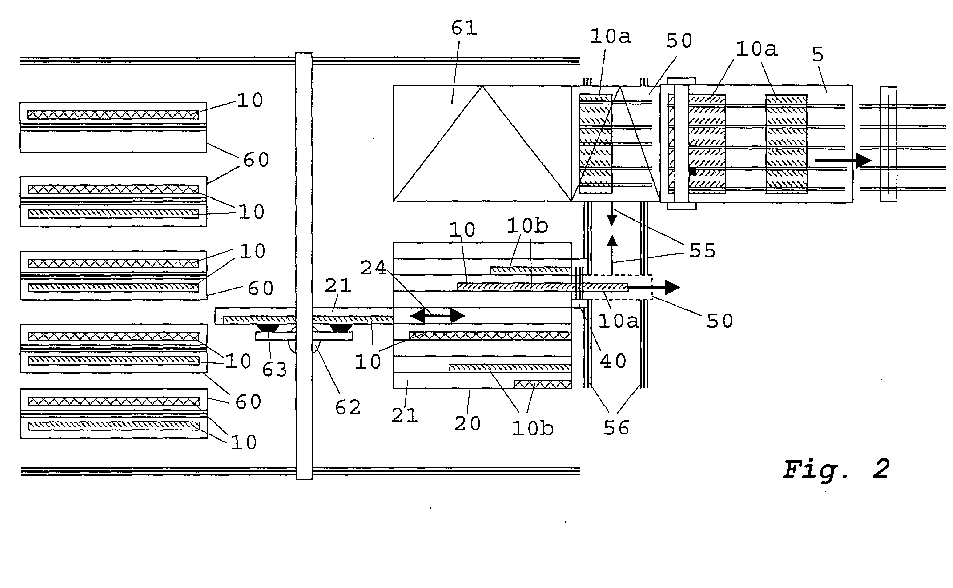

In einer Ausführungsform der Beschickungsvorrichtung ist eine Beladeeinheit 30 vorgesehen zum Beladen eines Faches 21 mit einer Glasplatte 10. Ähnlich wie oben beschrieben weist die Beladeeinheit 30 eine im Wesentlichen vertikale Stützfläche 32 sowie eine Auflagefläche 33 auf, die beispielsweise ein angetriebenes Transportband umfasst zum Hineinschieben einer Glasplatte 10 in ein entsprechendes Fach 21. In einer anderen Ausführungsform der Beschickungsvorrichtung ist das Fach 21 seitlich ausziehbar gestaltet wie dies in Fig. 2 durch den Doppelpfeil 24 dargestellt ist. Zum Beladen eines Faches 21 wird dieses mittels Antrieb herausgezogen, sodass das Fach 21 von aussen zugänglich ist. In einer weiteren Ausführungsform der Beschickungsvorrichtung ist die Breite eines Faches 21 so gewählt, dass eine Glasplatte vom Lager beispielsweise mit einem Portalkran aufgenommen und direkt von oben in das entsprechende Fach hineingesenkt werden kann. Um einen Zugang auch mit breiteren Portalkränen zu ermöglichen, ist es denkbar die Fächer 21 gegeneinander verschiebbar zu lagern, so däss zum Beladen eines Faches 21 der seitliche Abstand zum nächsten Fach vergrössert werden kann.

Wie Figur 1 weiter zeigt, ist optional eine Trennvorrichtung 40 vorgesehen, mit welcher eine in einem Fach 21 aufgenommene Glasplatte 10 entlang einer vertikalen Linie in zwei Teile 10a und 10b ("Beschickungsteil" bzw. "Restteil") getrennt werden kann ("X-Schnitt"). Die Trennvorrichtung 40 umfasst ein Schneidwerkzeug, mit welchem die Glasplatte 10 mit einer vertikalen Ritzlinie versehen werden kann, und einer Brecheinrichtung zum Brechen der Glasplatte 10. Die Brecheinrichtung umfasst beispielsweise zwei vertikale Saugleisten zum Festhalten der Glasplatte 10 auf der einen Seite und einen vertikalen Brechbalken, welcher zum Brechen auf die gegenüberliegende Seite der Glasplatte 10 drückt. Die Trennvorrichtung 40 kann optional auch ein Werkzeug zur Randentschichtung bei beschichteten Glasplatten umfassen.

Optional ist zur Übergabe des abgeschnittenen Teils 10a einer Glasplatte 10 eine Übergabeeinheit 50 vorgesehen, die sich zwischen der Speichereinheit 20 und der Glasverarbeitungsanlage 5 befindet. Die Übergabeeinheit 50 ist beispielsweise als Kipptisch ausgebildet, sodass der abgeschnittene Teil 10a von der Vertikale in die Horizontale gedreht und wie in Figur 1 dargestellt einer Glasverarbeitungsanlage 5 übergeben werden kann, mit welcher die Glasplattenteile 10a in horizontaler Lage verarbeitet werden. Der Kipptisch 50 dient weiter dazu eine in der Speichereinheit 20 gelagerte Glasplatte 10 beim Trennen entsprechend abzustützen, wozu er in die Vertikale gedreht und vor das entsprechende Fach 21 der Speichereinheit 20 verschoben wird.

Restliche Glasplatten, die sich in der Speichereinheit 20 befinden, die aber zu klein sind für eine Weiterbenutzung, werden mittels der Verschiebemittel der Speichereinheit 20 auf die Beladeeinheit 30 übergeben und zur Entsorgung einer Abfallstelle (nicht dargestellt) zugeführt. Es ist auch möglich, solche restlichen Glasplatten über die andere, d.h. gemäss Fig. 1 rechte Seite der Speichereinheit 20 auszuschleusen und sie mittels der verfahrbaren Übergabeeinheit 50 zur Abfallstelle zu transportieren.

Je nach Anwendung der Beschickungsvorrichtung sind die Speichereinheit 20, Beladeeinheit 30, Trennvorrichtung 40 und Übergabeeinheit 50 stationär oder wie dies in Figur 1 durch die Pfeile 25, 35, 45, 55 dargestellt ist, quer zur Glasverarbeitungsanlage 5 verfahrbar. Beispielsweise ist die Speichereinheit 20 stationär und die anderen Komponenten 30, 40, 50 verfahrbar. Diese Anordnung hat den Vorteil, dass die Speichereinheit 20, welche aufgrund der gespeicherten Glasplatten 10 relativ schwer und daher träge ist, nicht bewegt zu werden braucht und daher höhere Taktzeiten beim Beschicken erreicht werden können. Im Weiteren ist es durch entsprechende Verfahrbarkeit der Übergabeeinheit 50 möglich, noch weitere parallele Glasverarbeitungsanlagen 5a (in Figur 1 gestrichelt dargestellt) zu beschicken.

Figur 2 zeigt eine erste Anwendung der Vorrichtung zum Beschicken einer horizontalen Glasverarbeitungsanlage 5. Die Glasverarbeitungsanlage ist beispielsweise eine Glaszuschnittanlage, in welcher Glasplatten 10 verschiedener Arten in gewünschten Grössen und in einer gewünschten Reihenfolge zugeschnitten werden sollen. Beim Beispiel gemäss Figur 2 sind die Fächer 21 der Speichereinheit 22 ausziehbar gestaltet, sodass keine Beladeeinheit nötig ist. Die Speichereinheit 20 ist stationär, die Trennvorrichtung 40 und der Kipptisch 50 sind miteinander gekoppelt und entlang Schienen 56 verfahrbar. Weiter zeigt Figur 2 schematisch die im Lager bereitgestellten Roh-Glasplatten 10, welche dazu in Gestellen 60 in vertikaler Lage gelagert sind. Es ist auch ein weiterer Kipptisch 61 gezeigt, der an die Übergabeeinheit 50 ankoppelbar ist. Dadurch ist es möglich, falls dies von der Produktion her gewünscht ist, eine ganze Glasplatte 10 direkt der Glasverarbeitungsanlage 5 zuzuführen, ohne dass sie via die Speichereinheit 20 verschoben zu werden braucht.

Die Beschickung der Glasverarbeitungsanlage 5 erfolgt durch folgendes Verfahren:
- Die Glasplatten 10 werden einzeln aus dem Lager beispielsweise mittels eines Portalkrans 62 aufgenommen, welcher Sauger 63 aufweist, und in die entsprechenden Fächer 21 der Speichereinheit 20 übergeben.
- Je nach der geforderten Produktion der Glasverarbeitungsanlage 5 wird eine entsprechende Glasplatte 10 der gewünschten Art mittels der Verschiebemittel der Speichereinheit 20 soweit aus ihrem Fach 21 verschoben, dass ein Teil der Glasplatte 10 mit der gewünschten Länge mittels der Trennvorrichtung 40 abgetrennt werden kann. Dabei ist der Kipptisch 61 (in Figur 2 gestrichelt dargestellt) in die Vertikale gekippt, sodass er die Glasplatte 10 beim Trennvorgang stützt. Danach wird der Rest 10b der Glasplatte 10 zum weiteren Verbleib in der Speichereinheit 20 mittels der Verschiebemittel wieder etwas in das Fach 21 zurückverschoben.
- Der Kipptisch 50 wird von der Vertikalen um etwa 90 Grad gedreht, sodass sich nun der abgetrennte Teil 10a in horizontaler Lage befindet, und verfahren, bis er mit der Glasverarbeitungsanlage 5 fluchtet, und dann der abgetrennte Teil 10a übergeben.
- Der übergebene Teil 10a wird mittels mechanischer Anschläge und/oder optischen Abtastens neu positioniert. Somit wird gewährleistet, dass z.B. weitere Schnitte möglichst genau rechtwinklig oder parallel zu den bereits gebrochenen Kanten des Teils 10a erfolgen.

Entsprechend der gewünschten Reihenfolge und Sorte von Gläsern in der Produktionslinie werden Teile von den in der Speichereinheit 20 gespeicherten Glasplatten 10, 10b abgetrennt und der Glasverarbeitungsanlage 5 zugeführt.

Falls wie oben erwähnt, eine ganze Glasplatte auf einmal beschickt werden soll, so wird diese aus dem Lager direkt dem Kipptisch 61 übergeben, dieser in die Horizontale gekippt und via den Kipptisch 50 der Glasverarbeitungsanlage 5 übergeben.

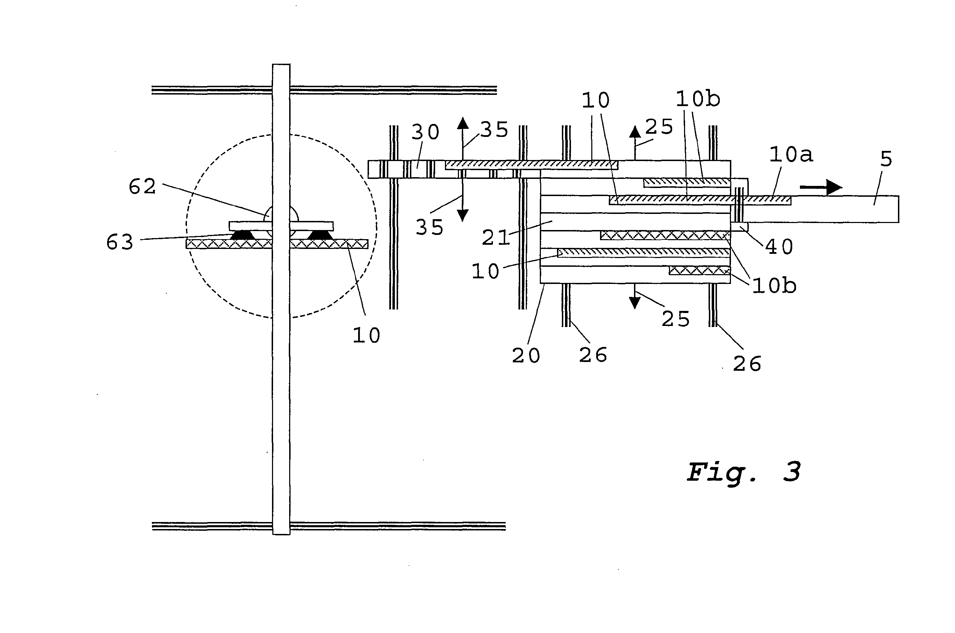

Figur 3 zeigt eine weitere Anwendung der Vorrichtung zum Beschicken einer Glasverarbeitungsanlage 5, bei welcher die Glasplatten 10 in vertikaler Lage zugeschnitten werden. Die Trennvorrichtung 40 zum Trennen einer Glasplatte 10 entlang einer vertikalen Linie ist in die Glasverarbeitungsanlage 5 integriert. Beim Beispiel gemäss Figur 3 ist die Speichereinheit 20 entlang den Schienen 26 verfahrbar, sodass die Übergabeeinheit entfällt. Die Beladeeinheit 30 ist ebenfalls verfahrbar, sodass das Beladen der Speichereinheit 20 mit einer Glasplatte 10 und das Überführen einer Glasplatte 10 auf die Glasverarbeitungsanlage 5 zeitlich nicht abgestimmt zu werden braucht. Falls kleinere Taktzeiten bei der Beschickung ausreichend sind, kann die Beladeeinheit 30 auch stationär sein, sodass zum Beladen eines leeren Faches 21 mit einer Glasplatte 10 die Speichereinheit 20 derart verfahren wird, dass das Fach 21 mit der Beladeeinheit 30 fluchtet.

Für das Beschicken der Glasverarbeitungsanlage 5 mit einem Teil 10a einer bestimmten Glasplatte 10, wird die Speichereinheit 20 derart verfahren, dass das Fach 21 mit der entsprechenden Glasplatte 10 und die vertikale Stützfläche der Glasverarbeitungsanlage 5 miteinander fluchten. Dann wird die Glasplatte 10 verschoben und ein Teil 10a davon mit der gewünschten Länge mittels der Trennvorrichtung 40 abgetrennt und der Weiterverarbeitung zugeführt. Der Glasplatten-Rest 10b verbleibt in der Speichereinheit 20. Entsprechend der gewünschten Produktion werden weitere Teile 10a von den in der Speichereinheit 20 gelagerten Glasplatten 10, 10b abgetrennt und verarbeitet.

Die Verarbeitung der Glasplatten 10 gemäss Figur 3 hat u.a. den Vorteil, dass sich diese immerzu in vertikaler Lage befinden, wodurch eine raumsparende Verarbeitung ermöglicht wird und ein Kippen und Neuausrichten der abgeschnittenen Teile 10a entfällt. Es ist auch möglich, ganze Glasplatten 10 ohne Trennvorgang der Glasverarbeitungsanlage 5 zuzuführen.

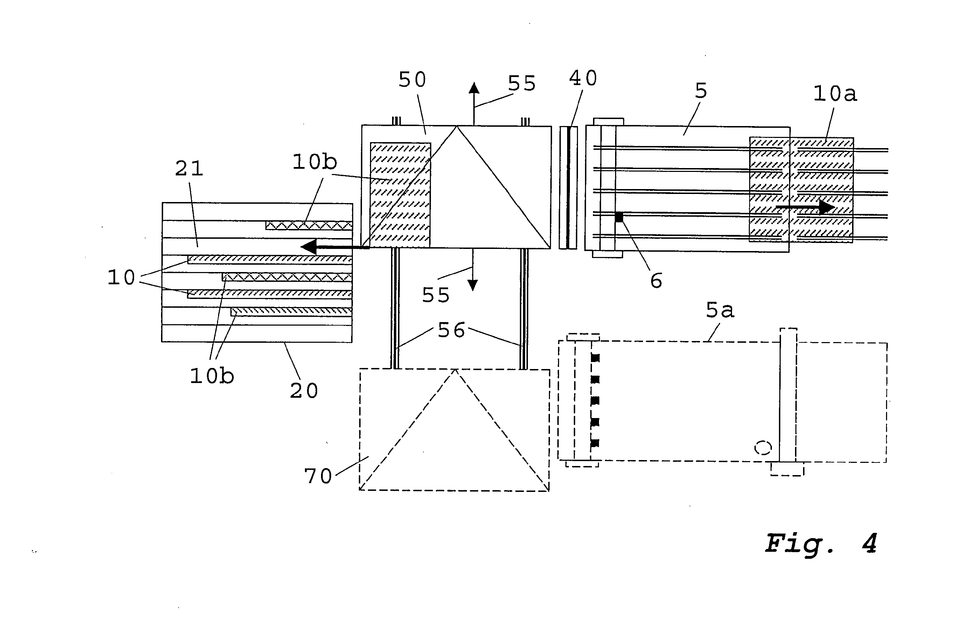

Figur 4 zeigt eine weitere Anwendung der Vorrichtung zum Beschicken einer horizontalen Glasverarbeitungsanlage 5, welche eine Schneidbrücke mit einem Schneidwerkzeug 6 aufweist. Die Speichereinheit 20 ist stationär, die Übergabeeinheit 50 ist in Form eines entlang den Schienen 56 verfahrbaren Kipptisches ausgebildet. Weiter ist vor der Glasverarbeitungsanlage 5 eine Trennvorrichtung 40 mit einem Brechbalken zum Brechen vorgesehen. Als Alternative ist es auch möglich, die Speichereinheit 20 verfahrbar zu gestalten und die Übergabeeinheit 50 stationär zu lassen.

Zum Beschicken der Glasverarbeitungsanlage 5 wird die entsprechende Glasplatte 10 von der Speichereinheit 20 via den Kipptisch 50 auf die Glasverarbeitungsanlage 5 übergeführt und mittels des Schneidwerkzeugs 6 geritzt. Dann wird die Glasplatte 10 soweit in Richtung des Kipptischs 50 zurückverschoben, dass sie mittels der Trennvorrichtung 40 entlang der geritzten Linie in zwei Teile 10a und 10b gebrochen werden kann. Der rechte Teil 10a wird dann der Glasverarbeitungsanlage 5 zugeführt und weiterverarbeitet. Der Restteil 10b der Glasplatte wird zusammen mit dem Kipptisch in die Vertikale gedreht und wieder in ein Fach 21 der Speichereinheit 20 zurückverschoben.

Es ist auch möglich, als zweite Übergabeeinheit noch einen weiteren Kipptisch 70 vorzusehen, der parallel zur ersten Übergabeeinheit 50 angeordnet und ebenfalls auf den Schienen 56 verfahrbar ist. Dies ermöglicht es, zwei parallele Glasverarbeitungsanlage 5 und 5a mit einer besonders hohen Taktrate zu beschicken.

Fig. 5 zeigt eine Seitenansicht der oben beschriebenen Speichereinheit 20, wobei die Fächer 21 jeweils mit Gleitmitteln 27 und Verschiebemitteln 28 versehen sind. Die Stützflächen 22 sind leicht geneigt gegenüber der Vertikalen zum Stützen der Glasplatten 10, 10b in einer im Wesentlichen vertikalen Lage. Die Stützflächen 22 sind z.B. durch Platten und/oder Stangen gebildet.

In Fig. 6 ist eine weitere Variante eines Verfahrens zum Beschicken einer Glasverarbeitungsanlage illustriert. Zum Anbringen von Ritzlinien 80, 81 dient ein Schneidwerkzeug 41, welches entlang zwei Achsen x₁ und x₂ verfahrbar ist. Somit kann die Glasplatte 10 nebst geraden Ritzlinien, die z.B. horizontal oder vertikal verlaufen, auch mit gekrümmten Ritzlinien versehen werden. Das Schneidwerkzeug 41 ist z.B. in der Trennvorrichtung 40 integriert. Bei der Anwendung gemäss Fig. 4 entspricht das Werkzeug 6 dem verfahrbaren Schneidwerkzeug 41.

Zum Beschicken der Glasverarbeitungsanlage wird in wiederholender Art und Weise jeweils eine Glasplatte 10 der gewünschten Art aus der Speichereinheit 20 herausgezogen, positioniert und bei gleichbleibender Lage mit einer ersten Ritzlinie 80, die von einer ersten Kante der Glasplatte 10 durchgehend zu einer zweiten Kante verläuft, und bei Bedarf mit mindestens einer weiteren Ritzlinie 81 versehen. Selbstverständlich sind keine weiteren Ritzlinien 81 mehr nötig, falls der Beschickungsteil 10a gerade der Endgrösse entspricht und dieser daher bei der Weiterverarbeitung nicht mehr in kleinere Teile geteilt zu werden braucht. Vorzugsweise wird bei gleichbleibender Lage der Glasplatte 10 der Beschickungsteil 10a vollständig geritzt, sodass die Weiterverarbeitung keinen weiteren Ritzvorgang mehr erfordert.

Die Glasplatte 10 wird dann entlang der ersten Ritzlinie 80 geteilt und der geritzte Beschickungsteil 10a durch Verschieben der Glasverarbeitungsanlage übergeben, wo mittels geeigneter Brechvorrichtungen der Beschickungsteil 10a entlang der Ritzlinien 81 in die gewünschten Zuschnitte gebrochen wird.

Das Verfahren durch Ritzen der Glasplatten am selben Ort erlaubt es, die Glasverarbeitungsanlage mit einer bestimmten Folge von bereits geritzten Beschickungsteilen 10a zu beschicken. Dies hat den Vorteil, dass die zur Glasverarbeitungsanlage verschobenen Beschickungsteile 10a zum Trennen in die entsprechenden Zuschnitte nicht mehr für einen Ritzvorgang, sondern lediglich für einen Brechvorgang zu positioniert werden brauchen. Dadurch können genauere Zuschnitte erzeugt werden, da das Ritzen ein genaueres Positionieren erfordern würde als das Brechen. Vorteilhaft ist natürlich auch, dass die Brechstationen der Glasverarbeitungsanlage keine Schneidwerkzeuge zum Ritzen der Glasplattenteile benötigen.

Aus den hier beschriebenen Vorrichtungen und Verfahren ergeben sich - nebst den bereits erwähnten - folgende Vorteile:
- Eine Glasverarbeitungsanlage kann gezielt mit der gerade benötigten Menge Glas beschickt werden. Dadurch fallen innerhalb der Glasverarbeitungsanlage keine Restblätter an, welche zwischengelagert und verwaltet zu werden brauchen, und somit können entsprechende Vorrichtungen eingespart werden.
- Die Speichereinheit kann im Lager der Glasplatten integriert werden, sodass das Glas-Material zentral gelagert und verwaltet werden kann. Dadurch braucht insbesondere jenes Glas-Material, welches bei der laufenden Produktion nicht benötigt wird, nur in reduziertem Mass verschoben werden.
- Eine Glasverarbeitungsanlage kann auf einfache Weise mit einer Vielzahl von verschiedenen Gläsern wie einfache oder beschichtete Gläser, Verbundgläser, etc. beschickt werden.
- Gläser der gewünschten Länge und Art können in einer bestimmbaren Reihenfolge einer Glasverarbeitungsanlage übergeben werden, sodass ein optimaler Produktionsfluss für die Herstellung von verschiedenen Produkten (wie Isoliergläser, Sicherheitsgläser, etc.) gewährleistet ist. Es wird auch die Herstellung in einer geringen Produkteanzahl erleichtert.
- Die Glasplatten in der Speichereinheit werden zum Trennen nur minimal verschoben. Nach dem Trennvorgang verbleibt der Rest der Glasplatte in Wesentlichen in der selben Lage. Durch diese vereinfachte Handhabung wird die Gefahr einer möglichen Beschädigung der Glasplatte verringert. Es kann auch die Taktzeit zum Beschicken einer Glasverarbeitungsanlage erhöht werden.
- Die Beschickungsvorrichtung ist sowohl für die horizontale als auch vertikale Verarbeitung von Glasplatten einsetzbar. Eine bestehende Glasverarbeitungsanlage kann ohne grösseren Aufwand mit der Beschickungsvorrichtung nachgerüstet werden.
- Da die Beschickungsvorrichtung sich in Bezug auf den Materialfluss vor der Glasverarbeitungsanlage befindet, wird die Verwaltung der Gläser innerhalb der Glasverarbeitungsanlage wesentlich vereinfacht. Es sind vereinfachtere Vorrichtungen zur Zwischenlagerung oder Sortierung von Gläsern innerhalb der Glasverarbeitungsanlage nötig. Das Beladen der Speichereinheit und das Entladen am Ende der Glasverarbeitungsanlage sind voneinander entkoppelt, sodass der Durchsatz durch die Glasverarbeitungsanlage einfacher bestimmbar ist.

## Patentansprüche

1. Verfahren zum Beschicken einer Glasverarbeitungsanlage (5), bei welchem Glasplatten (10, 10b) in einer Speichereinheit (20) gespeichert werden und welches folgende Schritte umfasst:
Schritt a) Mindestens teilweises Herausziehen einer der Glasplatten (10) aus der Speichereinheit; und
Schritt b) Trennen der Glasplatte in einen Restteil (10b), der in der Speichereinheit gespeichert wird, und einen Beschickungsteil (10a), der an die Glasverarbeitungsanlage übergeben wird; wobei
die Schritte a und b wiederholt werden, so dass in einer bestimmten Reihenfolge Glasplatten (10, 10b) aus der Speichereinheit herausgezogen und die abgetrennten Beschickungsteile der Glasverarbeitungsanlage übergeben werden.

2. Verfahren nach Anspruch 1, **dadurch gekennzeichnet, dass** die Glasplatten (10, 10b) in der Speichereinheit (20) in einer im Wesentlichen vertikalen Lage gespeichert werden.

3. Verfahren nach einem der Ansprüche 1 bis 2, **dadurch gekennzeichnet, dass** jeweils beim Schritt a die Glasplatte (10) nur teilweise aus der Speichereinheit (20) gezogen wird, sodass beim Trennen der Restteil (10b) von der Speichereinheit gestützt wird.

4. Verfahren nach einem der Ansprüche 1 bis 3, **dadurch gekennzeichnet, dass**
beim Schritt b die Glasplatte (10) in einer im Wesentlichen vertikalen Lage getrennt wird und der Beschickungsteil (10a) zur Übergabe an die Glasverarbeitungsanlage translatorisch verschoben und/oder in eine im Wesentlichen horizontale Lage gekippt wird.

5. Verfahren nach einem der Ansprüche 1 bis 4, **dadurch gekennzeichnet, dass** die Glasplatte (10) beim Trennen gemäss Schritt b zumindest teilweise durch eine Stützfläche von der Glasverarbeitungsanlage (5) gestützt wird und mittels einer Trennvorrichtung (40) der Glasverarbeitungsanlage getrennt wird.

6. Verfahren nach einem der Ansprüche 1 bis 5, **dadurch gekennzeichnet, dass** die Glasplatte (10) beim Schritt a vollständig aus der Speichereinheit (20) herausgezogen wird und nach dem Trennen gemäss Schritt b der Restteil (10b) der Glasplatte zur Speicherung in die Speichereinheit zurückverschoben wird.

7. Verfahren nach einem der Ansprüche 1 bis 6, **dadurch gekennzeichnet, dass** die Glasplatten (10) aus einem Lager entnommen und der Speichereinheit (20) durch translatorische Verschiebung übergeben werden, sodass sie dabei im Wesentlichen in derselben Lage bleiben.

8. Verfahren nach einem der Ansprüche 1 bis 7, **dadurch gekennzeichnet, dass** der Beschickungsteil (10a) nach der Übergabe an die Glasverarbeitungsanlage (5) mittels mechanischer Anschläge und/oder optischen Abtastens neu positioniert wird.

9. Verfahren nach einem der Ansprüche 1 bis 8, **dadurch gekennzeichnet, dass** beim Schritt a die Glasplatte (10) nur teilweise auf einen verfahrbaren Kipptisch (50) verschoben wird, so dass beim Trennen gemäss Schritt b der Beschickungsteil (10a) vom Kipptisch gestützt wird, und der Beschickungsteil durch Kippen und Verfahren des Kipptisches der Glasverarbeitungsanlage (5) übergeben wird.

10. Verfahren nach einem der Ansprüche 1 bis 9, **dadurch gekennzeichnet, dass** bei Bedarf eine in der Speichereinheit (20) gespeicherte Glasplatte ohne Trennen in Rest- und Beschickungsteil der Glasverarbeitungsanlage (5) übergeben wird.

11. Verfahren nach einem der Ansprüche 1 bis 10, **dadurch gekennzeichnet, dass** mindestens eine der gespeicherten Glasplatten (10), von welcher ein Beschickungsteil abgetrennt wird, vor dem Schritt b mit mindestens zwei verschiedenen Ritzlinien (80, 81) versehen wird.

12. Verfahren nach einem der Ansprüche 1 bis 11, **dadurch gekennzeichnet, dass** mindestens ein abzutrennendes Beschickungsteil (10a) vor dem Schritt b vollständig geritzt wird, sodass der Beschickungsteil nach dem Abtrennen und der Übergabe an die Glasverarbeitungsanlage (5) ohne weiteres Ritzen in die gewünschten Zuschnitte trennbar ist.

13. Vorrichtung zum Beschicken einer Glasverarbeitungsanlage (5), **gekennzeichnet durch** folgende Komponenten:
eine Speichereinheit (20) mit mindestens zwei Fächern (21), wobei in jedes Fach mindestens eine Glasplatte (10, 10b) aufgenommen werden kann,
und Verschiebemittel (28) zum Verschieben einer in einem Fach aufgenommenen Glasplatte, sodass diese mindestens teilweise aus dem Fach herausschiebbar ist.

14. Vorrichtung nach Anspruch 13, **dadurch gekennzeichnet, dass** sie eine Trennvorrichtung (40) umfasst und/oder an eine Trennvorrichtung (40) ankoppelbar ist, wobei eine in einem Fach (21) aufgenommene Glasplatte (10) während des Abtrennens eines Teils (10a) davon mittels der Trennvorrichtung durch das entsprechende Fach stützbar ist.

15. Vorrichtung nach einem der Ansprüche 13 bis 14, **dadurch gekennzeichnet, dass** die Fächer (21) Gleitmittel (27) umfassen, sodass die aufgenommenen Glasplatten (10, 10b) entlang der Fächer gleiten können.

16. Vorrichtung nach einem der Ansprüche 13 bis 15, **dadurch gekennzeichnet, dass** die Fächer (21) jeweils eine Stützfläche (22) aufweisen zum Stützen einer aufgenommenen Glasplatte (10) in einer im Wesentlichen vertikalen Lage, wobei vorzugsweise der Winkel zwischen der Stützfläche und der Vertikalen zwischen 0 und 10 Grad liegt.

17. Vorrichtung nach einem der Ansprüche 13 bis 16, **dadurch gekennzeichnet, dass** sie eine Übergabeeinheit (50) aufweist,
mit welcher eine in einem Fach (21) aufgenommene Glasplatte (10) beim Abtrennen eines Teils (10a) davon zumindest teilweise stützbar ist und
welche zwischen der Speichereinheit (20) und der Glasverarbeitungsanlage (5) verfahrbar ist zur Übergabe des abgetrennten Teils an die Glasverarbeitungsanlage.

18. Vorrichtung nach Anspruch 17, **dadurch gekennzeichnet, dass** die Übergabeeinheit (50) einen Kipptisch umfasst zum Kippen und Verschieben des abgetrennten Teils (10a).

19. Vorrichtung nach einem der Ansprüche 13 bis 18, **dadurch gekennzeichnet, dass** die Speichereinheit (20) verfahrbar ist, sodass eine in einem Fach (21) aufgenommene Glasplatte (10) zumindest teilweise auf die Glasverarbeitungsanlage (5) verschiebbar ist.

20. Vorrichtung nach einem der Ansprüche 13 bis 19, **dadurch gekennzeichnet, dass** sie eine Beladeeinheit (30) aufweist zur Aufnahme einer Glasplatte (10) und Verschieben der Glasplatte in ein Fach (21) der Speichereinheit (20), wobei die Beladeeinheit vorzugsweise verfahrbar (35) ist.

21. Vorrichtung nach einem der Ansprüche 13 bis 20, **dadurch gekennzeichnet, dass** sie ein Schneidwerkzeug (41) umfasst, welches entlang mindestens zwei Achsen (x₁,x₂) verfahrbar ist.

22. Glasverarbeitungsanlage, insbesondere zum Trennen von Glasplatten in horizontaler und/oder vertikaler Lage, mit einer Vorrichtung zum Durchführen des Verfahrens nach einem der Ansprüche 1 bis 12 oder mit einer Vorrichtung gemäss einem der Ansprüche 13 bis 21.
